# EUROPEAN PATENT APPLICATION

(11) **EP 4 696 414 A1**
(43) Date of publication of application: **18.02.2026**
(21) Application number: 24789066.8
(22) Date of filing: 12.04.2024
(51) Int. Cl.: B01J 35/39, B01J 35/58, B01J 23/06, B01J 23/14, B01J 27/057, B01J 23/28, B01J 35/59

(54) **PHOTOCATALYST AND METHOD FOR PRODUCING SAME**

(30) Priority: 12.04.2023 KR 20230048453; 08.04.2024 KR 20240047191
(71) Applicant: Industry-University Cooperation Foundation Hanyang University ERICA Campus, Ansan-si, Gyeonggi-do 15588 (KR)
(72) Inventor: LEE, Caroline Sun Yong, Ansan-si Gyeonggi-do 15588 (KR); CHARLES, Hazina Mwaitalako, Ansan-si Gyeonggi-do 15588 (KR); KHAN, Haritham, Ansan-si Gyeonggi-do 15588 (KR); PLASSIDIUS, Joachim Chengula, Ansan-si Gyeonggi-do 15588 (KR); PAWAR, Rajendra Charandeo, Ansan-si Gyeonggi-do 15588 (KR)
(74) Representative: dompatent
(86) International application number: PCT/KR2024/004891
(87) International publication number: WO 2024/215125

(57) **Abstract**

Provided is a method for producing a photocatalyst, comprising the steps of: producing a hollow nanofibre, and forming a nanosheet on the hollow nanofibre to produce a photocatalyst.

## Description

### [Technical Field]

The present disclosure relates to a photocatalyst and a method for producing the same, and more particularly, to a photocatalyst having excellent carbon dioxide (CO₂) photoreduction activity, carbon dioxide (CO₂) selectivity, carbon monoxide (CO) and methane (CH₄) reduction yield, and stability without using a precious metal, and a method for producing the same.

### [Background Art]

When carbon dioxide (CO₂) emissions are excessively increased, greenhouse gas concentrations may be increased, thereby causing global climate change. Accordingly, efforts to reduce carbon dioxide are being made worldwide.

As a part of the efforts to reduce carbon dioxide, research for converting carbon dioxide into other materials, for example, carbon monoxide (CO) and/or methan (CH₄), is being conducted.

In order to convert carbon dioxide into other materials as described above, a photocatalyst may be used. For example, Korean Patent Registration No. 10-2219540 discloses a method for producing a blue titania composite wrapped with graphene on which platinum nanoparticles are photo-deposited, the method including: a first step of producing blue titania nanoparticles; a second step of producing blue titania nanoparticles wrapped with graphene by mixing the blue titania nanoparticles with a graphene oxide solution, and performing a vacuum heat treatment; a third step of producing a suspension by mixing a solution including the blue titania nanoparticles wrapped with the graphene and a platinum (Pt) precursor; a fourth step of performing a photo-deposition process on the suspension; and a fifth step of obtaining crystals by performing filtering, washing, and drying processes, wherein the platinum (Pt) precursor in the third step is input such that a content of deposited platinum nanoparticles is 0.5 to 1.5 wt% based on a total weight of the crystals obtained in the fifth step.

For another example, Korean Patent Registration No. 10-2082872 discloses a method for producing blue titania nanoparticles on which platinum nanoparticles are photo-deposited, the method including: a first-first step of producing a first mixture by mixing 13 to 17 parts by weight of sodium borohydride (NaBH₄) based on 100 parts by weight of titania (TiO₂) nanoparticles having a size of 20 to 25 nm; a first-second step of heating the first mixture at a temperature of 325 to 375 °C for 25 to 35 minutes under an inert gas; a first-third step of producing blue titania nanoparticles having Raman spectral peaks at 145.3 to 147.3 cm⁻¹, 197.06 to 199.06 cm⁻¹, 392.59 to 394.59 cm⁻¹, 514.43 to 516.43 cm⁻¹, and 636.25 to 638.25 cm⁻¹ upon measurement by Raman spectroscopy by washing the heated first mixture with a solvent, and performing drying at a temperature of 80 to 100 °C for 11 to 13 hours; a second step of producing a suspension by mixing the blue titania nanoparticles and chloroplatinic acid (H₂PtCl₆) in a weight ratio of 1:0.01 to 0.0115 under a closed system and darkness; and a third step of producing blue titania nanoparticles on which platinum nanoparticles are photo-deposited, which have a size of 2.3 to 2.7 nm, by irradiating the suspension with light having a light intensity of 0.8 to 1.2 sun (kW/m²) for 1.5 to 2.5 hours under stirring, wherein the blue titania nanoparticles on which platinum nanoparticles are photo-deposited have a BET surface area of 45 to 45.7 m²g⁻¹ and photoluminescence (PL) spectral peaks at wavelengths of 361.54 to 363.54 nm, 377.07 to 379.07 nm, 391.32 to 393.32 nm, 424.24 to 426.24 nm, 442.86 to 444.86 nm, 485.09 to 487.09 nm, and 518.80 to 520.80 nm upon measurement of a PL spectrum.

However, conventional photocatalysts for converting carbon dioxide as described above use expensive precious metals such as platinum, so that costs of the photocatalysts may be increased.

Accordingly, there is a need for a photocatalyst capable of efficiently converting carbon dioxide at a low cost, unlike existing photocatalysts that use expensive precious metals.

### [Disclosure]

### [Technical Problem]

A technical object of the present disclosure is to provide a photocatalyst, capable of efficiently converting carbon dioxide (CO₂) at a low cost, unlike existing photocatalysts that use expensive precious metals, and a method for producing the same.

Another technical object of the present disclosure is to provide a photocatalyst having excellent carbon dioxide (CO₂) photoreduction activity, carbon dioxide (CO₂) selectivity, carbon monoxide (CO) and methane (CH₄) reduction yield, and stability, and a method for producing the same.

Technical objects of the present disclosure are not limited to the technical objects described above.

### [Technical Solution]

To achieve the technical objects described above, the present disclosure provides a method for producing a photocatalyst.

According to one embodiment, the method for producing the photocatalyst includes: producing a hollow nanofibre; and producing a photocatalyst by forming a nanosheet on the hollow nanofibre.

According to one embodiment, the producing of the hollow nanofibre may include: producing a mixed solution by mixing a first source including a first metal element and a second source including a second metal element that is different from the first metal element; producing a composite nanofibre by electrospinning the mixed solution; and producing the hollow nanofibre in which a hollow is formed in the composite nanofibre by performing a heat treatment on the composite nanofibre.

According to one embodiment, the hollow nanofibre may include a ternary phase including at least one of the first metal element and the second metal element.

According to one embodiment, the ternary phase may include zinc oxide (ZnO), tin oxide (SnO₂), and zinc tin dioxide (ZnSnO₃), the nanosheet may include molybdenum diselenide (MoSe₂), electrons may move from the nanosheet to the ternary phase, and carbon dioxide (CO₂) may be reduced to carbon monoxide (CO) or methan (CH₄).

According to one embodiment, in the method for producing the photocatalyst, the first source and the second source may be further mixed with a polymer material and an acid material.

According to one embodiment, the heat treatment may include: a first heat treatment performed at a first temperature for a first time; and a second heat treatment performed at a second temperature that is lower than the first temperature for a second time that is shorter than the first time, and the hollow may be formed through the second heat treatment.

According to one embodiment, the first source may include zinc acetate dihydrate (Zn(CH₃COO)₂.2H₂O) or zinc chloride (ZnCl₂), the second source may include tin(IV) chloride pentahydrate (SnCl₄5H₂O), the polymer material may include polyvinylpyrrolidone (PVP; (C₆H₉NO)ₙ), and the acid material may include acetic acid (CH₃COOH).

According to one embodiment, in the producing of the photocatalyst, the photocatalyst in which the nanosheet is formed on the hollow nanofibre may be produced by mixing the hollow nanofibre with a transition metal source and a chalcogen source, and performing a hydrothermal treatment, and the hollow nanofibre, the transition metal source, and the chalcogen source may be further mixed with a reducing agent.

According to one embodiment, the hollow nanofibre may be provided in an amount of 5 wt% or more and 15 wt% or less.

According to one embodiment, a hydrothermal treatment for producing the photocatalyst may be performed at a third temperature that is lower than the second temperature for a third time that is longer than the first time.

According to one embodiment, the transition metal source may include sodium molybdate (Na₂MoO₄), and the chalcogen source may include selenium (Se).

To achieve the technical objects described above, the present disclosure provides a photocatalyst.

According to one embodiment, the photocatalyst includes: a hollow nanofibre including a hollow; and a nanosheet coupled to the hollow nanofibre.

According to one embodiment, the hollow nanofibre may include a ternary phase including at least one of a first metal element and a second metal element that is different from the first metal element, and the nanosheet may include a transition metal element and a chalcogen element.

According to one embodiment, electrons may move from the nanosheet to the ternary phase, and carbon dioxide may be reduced to carbon monoxide and methane.

According to one embodiment, the first metal element may include zinc (Zn), the second metal element may include tin (Sn), the ternary phase may include zinc oxide (ZnO), tin oxide (SnO₂), and zinc tin dioxide (ZnSnO₃), the transition metal element may include molybdenum (Mo), the chalcogen element may include selenium (Se), and the nanosheet may include molybdenum diselenide (MoSe₂).

### [Advantageous Effects]

According to an embodiment of the present disclosure, there may be provided a method for producing a photocatalyst, the method including: producing a hollow nanofibre; and producing a photocatalyst by forming a nanosheet on the hollow nanofibre.

Accordingly, the photocatalyst including a hollow nanofibre including a hollow, and a nanosheet coupled to the hollow nanofibre may be produced.

According to an embodiment of the present disclosure, when the photocatalyst is irradiated with light, electrons may move from the nanosheet to a ternary phase of the hollow nanofibre, and carbon dioxide (CO₂) may be reduced to carbon monoxide (CO) and/or methane (CH₄).

In other words, the photocatalyst according to the embodiment of the present disclosure can convert carbon dioxide (CO₂) into other materials, for example, carbon monoxide (CO) and/or methane (CH₄), without using expensive precious metals, unlike conventional photocatalysts.

Accordingly, the photocatalyst according to the embodiment of the present disclosure can efficiently convert carbon dioxide (CO₂) at a low cost, unlike existing photocatalysts that use expensive precious metals.

Furthermore, according to the embodiment of the present disclosure, the photocatalyst can also have excellent carbon dioxide (CO₂) photoreduction activity, carbon dioxide (CO₂) selectivity, carbon monoxide (CO), methane (CH₄) , and/or hydrogen (H₂) reduction yield, and stability.

### [Description of Drawings]

FIG. 1 is a flowchart for describing a method for producing a photocatalyst according to an embodiment of the present disclosure.
FIG. 2 is a flowchart for describing a method for producing a mixed solution, a composite nanofibre, and a hollow nanofibre according to an embodiment of the present disclosure.
FIG. 3 is a view for describing the method for producing the mixed solution according to the embodiment of the present disclosure.
FIG. 4 is a view for describing the method for producing the composite nanofibre according to the embodiment of the present disclosure.
FIG. 5 is a view for describing the method for producing the hollow nanofibre according to the embodiment of the present disclosure.
FIG. 6 is a view for describing the method for producing the photocatalyst according to the embodiment of the present disclosure.
FIG. 7 is a view for describing the photocatalyst according to the embodiment of the present disclosure.
FIGS. 8 and 9 are field emission scanning electron microscope (FE-SEM) photographs of a composite nanofibre according to Experimental Example 5 of the present disclosure.
FIG. 10 is an FE-SEM photograph of a composite nanofibre according to a modified example of Experimental Example 5 of the present disclosure.
FIG. 11 is an FE-SEM photograph of a hollow nanofibre according to Experimental Example 6 of the present disclosure.
FIG. 12 is a high-resolution transmission electron microscopy (HR-TEM) photograph of the hollow nanofibre according to Experimental Example 6 of the present disclosure.
FIG. 13 is an FE-SEM photograph of a photocatalyst according to Experimental Example 2 of the present disclosure.
FIG. 14 is an HR-TEM photograph of the photocatalyst according to Experimental Example 2 of the present disclosure.
FIG. 15 is a graph showing ultraviolent-visible light absorption of Experimental Examples 1 to 6 of the present disclosure.
FIG. 16 is a graph showing band-gap energy of Experimental Examples 1 to 6 of the present disclosure.
FIG. 17 is a graph showing X-ray diffraction (XRD) of Experimental Examples 1 to 6 of the present disclosure.
FIG. 18 is a graph showing X-ray photoelectron spectroscopy (XPS) of Experimental Example 2 of the present disclosure.
FIG. 19 is a graph showing steady-state photoluminescence spectra of Experimental Examples 1 to 6 of the present disclosure.
FIG. 20 is a graph showing time-resolved photoluminescence spectra of Experimental Examples 1 to 6 of the present disclosure.
FIG. 21 is a graph showing Brunauer-Emmett-Teller (BET) adsorption isotherms of Experimental Examples 1 to 6 of the present disclosure.
FIG. 22 is a graph showing Nyquist plots of Experimental Examples 1 to 6 of the present disclosure.
FIG. 23 is a graph showing on-off switching of Experimental Examples 1 to 6 of the present disclosure.
FIG. 24 is a graph showing carbon monoxide (CO), methane (CH₄), and hydrogen (H₂) yield of Experimental Examples 1 to 6 of the present disclosure.
FIG. 25 is a graph showing carbon dioxide (CO₂) selectivity of Experimental Examples 1 to 6 of the present disclosure.
FIG. 26 is a graph showing carbon monoxide (CO), methane (CH₄) , and hydrogen (H₂) yield of Experimental Example 2 of the present disclosure under various conditions.
FIG. 27 is a graph showing stability of Experimental Example 2 of the present disclosure.

### [Mode for Invention]

Hereinafter, exemplary embodiments of the present disclosure will be described in detail with reference to the accompanying drawings. However, the technical idea of the present disclosure is not limited to the embodiments described herein, but may be embodied in different forms. The embodiments introduced herein are provided to sufficiently deliver the idea of the present disclosure to those skilled in the art so that the disclosed contents may become thorough and complete.

When it is mentioned in the present disclosure that one element is on another element, it means that one element may be directly formed on another element, or a third element may be interposed between one element and another element. Further, in the drawings, thicknesses of shapes and regions are exaggerated for effective description of the technical contents.

In addition, although the terms such as first, second, and third have been used to describe various elements in various embodiments of the present disclosure, the elements are not limited by the terms. The terms are used only to distinguish one element from another element. Therefore, an element mentioned as a first element in one embodiment may be mentioned as a second element in another embodiment. The embodiments described and illustrated herein include their complementary embodiments, respectively. Further, the term "and/or" used in the present disclosure is used to include at least one of the elements enumerated before and after the term.

As used herein, an expression in a singular form includes a meaning of a plural form unless the context clearly indicates otherwise. Further, the terms such as "including" and "having" are intended to designate the presence of features, numbers, steps, elements, or combinations thereof described herein, and shall not be construed to preclude any possibility of the presence or addition of one or more other features, numbers, steps, elements, or combinations thereof. In addition, the term "connection" used herein is used to include both indirect and direct connections of a plurality of elements.

In addition, the term such as "... unit", "...er", or "module" described herein refers to a unit for processing at least one function or operation, which may be implemented through hardware, software, or a combination of hardware and software.

Further, in the following description of the present disclosure, detailed descriptions of known functions or configurations incorporated herein will be omitted when they may make the gist of the present disclosure unnecessarily unclear.

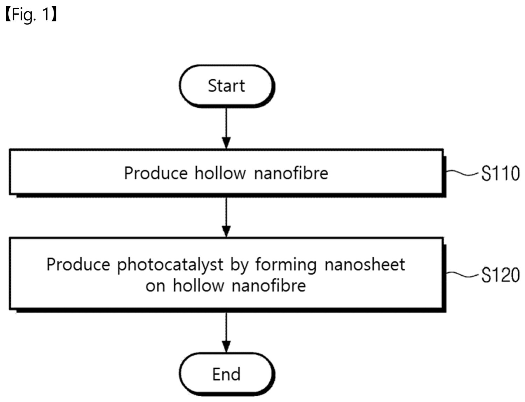

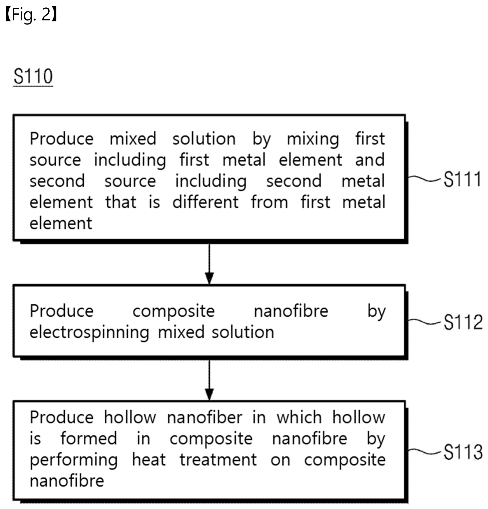

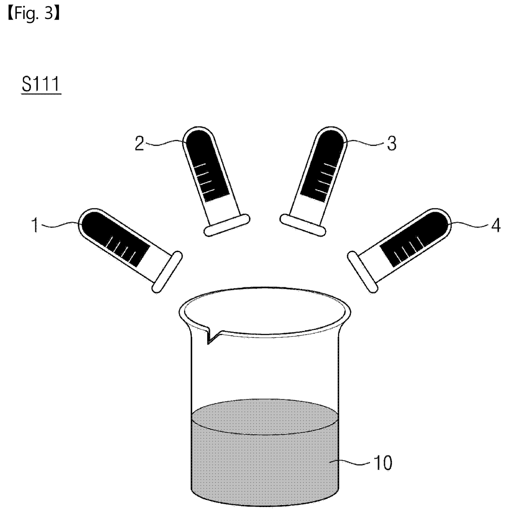

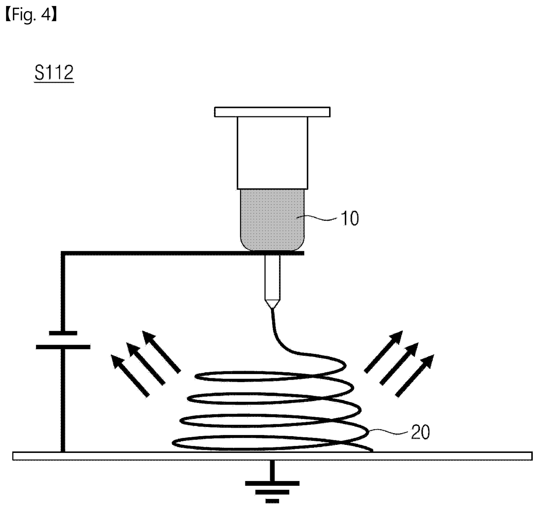

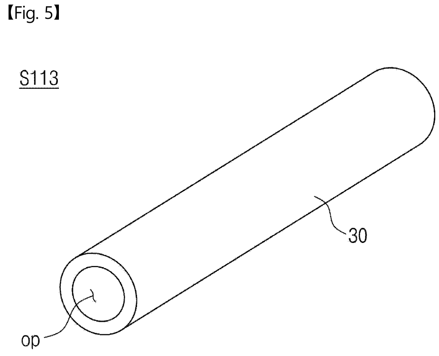

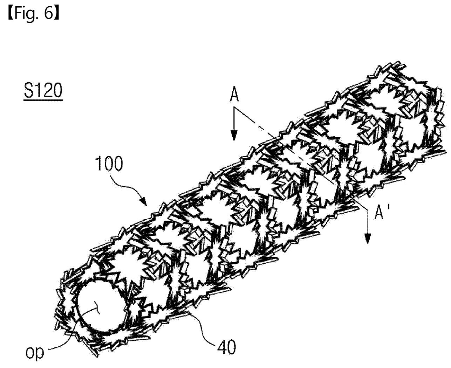

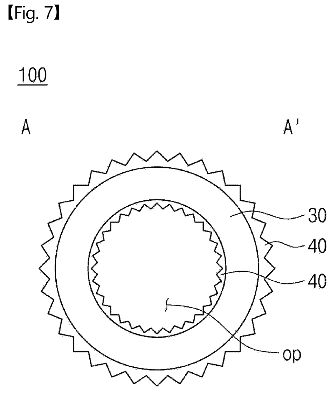

FIG. 1 is a flowchart for describing a method for producing a photocatalyst according to an embodiment of the present disclosure, FIG. 2 is a flowchart for describing a method for producing a mixed solution, a composite nanofibre, and a hollow nanofibre according to an embodiment of the present disclosure, FIG. 3 is a view for describing the method for producing the mixed solution according to the embodiment of the present disclosure, FIG. 4 is a view for describing the method for producing the composite nanofibre according to the embodiment of the present disclosure, FIG. 5 is a view for describing the method for producing the hollow nanofibre according to the embodiment of the present disclosure, FIG. 6 is a view for describing the method for producing the photocatalyst according to the embodiment of the present disclosure, and FIG. 7 is a view for describing the photocatalyst according to the embodiment of the present disclosure.

Referring to FIG. 1, a hollow nanofibre 30 may be produced (S110). In detail, referring to FIGS. 2 and 3, in order to produce the hollow nanofibre 30, a mixed solution 10 may be produced by mixing a first source 1 including a first metal element and a second source 2 including a second metal element that is different from the first metal element (S111). In more detail, the mixed solution 10 may be produced by further mixing the first source 1 and the second source 2 with a polymer material 3 and an acid material 4. For example, the first metal element may be zinc (Zn), the first source 1 may be zinc acetate dihydrate (Zn (CH₃COO)₂.2H₂O) or zinc chloride (ZnCl₂), the second metal element may be tin (Sn), the second source 2 may be tin (IV) chloride pentahydrate (SnCl₄5H₂O), the polymer material 3 may be polyvinylpyrrolidone (PVP; (C₆H₉NO)ₙ), and the acid material 4 may be acetic acid (CH₃COOH). However, the present disclosure is not limited thereto. In detail, for example, in an N,N-dimethylformamide (DMF) solvent, zinc chloride (ZnCl₂) and tin(IV) chloride pentahydrate (SnCl₄5H₂O) may be dissolved as the first source 1 and the second source 2, respectively, polyvinylpyrrolidone ((C₆H₉NO)ₙ) may be mixed as the polymer material 3, and acetic acid (CH₃COOH) may be mixed as the acid material 4. However, the present disclosure is not limited thereto. In more detail, for example, in 7 mL of an N,N-dimethylformamide (DMF) solvent, 850 mg of zinc chloride (ZnCl₂) and 700 mg of tin(IV) chloride pentahydrate (SnCl₄5H₂O) may be dissolved as the first source 1 and the second source 2, respectively, 600 mg of polyvinylpyrrolidone ((C₆H₉NO)ₙ) K90 may be mixed and stirred for 24 hours as the polymer material 3, and 0.1 mL of acetic acid (CH₃COOH) may be mixed for 2 hours as the acid material 4. However, the present disclosure is not limited thereto.

Accordingly, the mixed solution 10 may be produced.

Continuously referring to FIGS. 2 and 4, a composite nanofibre 20 may be produced by electrospinning the mixed solution 10 (S112). In more detail, the mixed solution 10 may be provided inside a syringe including a needle, and discharged onto a collector. In more detail, for example, the mixed solution 10 may be provided inside a syringe including a 25-gauge needle that is away from the collector by 110 mm, discharged onto the collector at a DC voltage of 10 kV and a flow rate of 10 µL/min, collected every 2 hours, and dried in a 60 °C oven for 3 hours. However, the present disclosure is not limited thereto.

Accordingly, the composite nanofibre 20 may be produced.

Continuously referring to FIGS. 2 and 5, the hollow nanofibre 30 in which a hollow op is formed in the composite nanofibre 20 by performing a heat treatment on the composite nanofibre 20 may be produced (S113). In more detail, the heat treatment may include: a first heat treatment performed at a first temperature for a first time; and a second heat treatment performed at a second temperature that is lower than the first temperature for a second time that is shorter than the first time. In more detail, for example, the first heat treatment may be performed at 700 °C for 3 hours at a ramping rate of 4 °C/min, and the second heat treatment may be performed at 600 °C for 2 hours at a ramping rate of 2 °C/min. However, the present disclosure is not limited thereto.

Accordingly, the hollow op may be formed in the composite nanofibre 20, so that the hollow nanofibre 30 may be produced. In more detail, the hollow op may be formed through the second heat treatment.

According to one embodiment, the hollow nanofibre 30 may include a ternary phase including at least one of the first metal element and the second metal element. In more detail, for example, the ternary phase may be zinc oxide (ZnO), tin dioxide (SnO₂), and zinc tin dioxide (ZnSnO₃).

According to one embodiment, when a photocatalyst 100 in which a nanosheet 40 that will be described below is formed on the hollow nanofibre 30 is irradiated with light, electrons may move from the nanosheet 40 to the ternary phase.

Accordingly, carbon dioxide (CO₂) may be reduced to carbon monoxide (CO) and/or methane (CH₄).

In other words, the photocatalyst 100 according to an embodiment of the present disclosure may convert carbon dioxide (CO₂) into other materials, for example, carbon monoxide (CO) and/or methane (CH₄), without using expensive precious metals, unlike conventional photocatalysts.

Accordingly, the photocatalyst 100 according to the embodiment of the present disclosure may efficiently convert carbon dioxide (CO₂) at a low cost, unlike existing photocatalysts that use expensive precious metals.

Continuously referring to FIGS. 1 and 6, a photocatalyst 100 may be produced by forming a nanosheet 40 on the hollow nanofibre 30 (S120). In detail, the photocatalyst 100 in which the nanosheet 40 is formed on the hollow nanofibre 30 may be produced by mixing the hollow nanofibre 30 with a transition metal source and a chalcogen source, and performing a hydrothermal treatment. In more detail, the hollow nanofibre 30, the transition metal source, and the chalcogen source may be further mixed with a reducing agent. In detail, for example, the transition metal source may be sodium molybdate (Na₂MoO₄), and the chalcogen source may be selenium (Se). However, the present disclosure is not limited thereto. Accordingly, the nanosheet 40 may include molybdenum diselenide (MoSe₂). Meanwhile, the reducing agent may be sodium borohydride (NaBH₄). However, the present disclosure is not limited thereto. In detail, for example, in a mixed solvent of distilled water and ethanol, sodium molybdate (Na₂MoO₄) powder and selenium (Se) powder may be mixed and dissolved at 1:1 vol% as the transition metal source and the chalcogen source, respectively, sodium borohydride (NaBH₄) may be added and stirred as the reducing agent, and the hollow nanofibre 30 may be added and stirred, so that a mixed solution may be produced. In more detail, for example, in 60 mL of a mixed solvent of 30 mL of distilled water and 30 mL of ethanol, 630 mg of sodium molybdate (Na₂MoO₄) powder and 400 mg of selenium (Se) powder may be mixed and dissolved at 1:1 vol% for 30 minutes as the transition metal source and the chalcogen source, respectively, 98 mg of sodium borohydride (NaBH₄) may be added and stirred for 30 minutes as the reducing agent, and the hollow nanofibre 30 may be added and stirred for 1 hour, so that the mixed solution may be produced. However, the present disclosure is not limited thereto.

According to one embodiment, the hollow nanofibre 30 may be provided in an amount of 5 wt% or more and 15 wt% or less. In more detail, for example, the hollow nanofibre 30 may be provided in an amount of 10 wt%.

Accordingly, according to the embodiment of the present disclosure, the produced photocatalyst 100 may have excellent carbon dioxide (CO₂) photoreduction activity, carbon dioxide (CO₂) selectivity, carbon monoxide (CO), methane (CH₄), and/or hydrogen (H₂) reduction yield, and stability.

According to one embodiment, a hydrothermal treatment for producing the photocatalyst 100 may be performed at a third temperature that is lower than the second temperature for a third time that is longer than the first time. In more detail, for example, the mixed solution may be provided inside an autoclave, and a hydrothermal treatment may be performed at 200 °C for 49 hours, so that a preliminary photocatalyst may be produced. However, the present disclosure is not limited thereto.

According to one embodiment, after the hydrothermal treatment is performed, the preliminary photocatalyst may be cooled to a room temperature, filtered, repeatedly washed with distilled water and ethanol until pH 7 is reached to remove salts and residues, and dried in an oven for 12 hours. However, the present disclosure is not limited thereto.

Accordingly, as shown in FIGS. 6 and 7, the photocatalyst 100 according to the embodiment of the present disclosure, which includes the hollow nanofibre 30 including a hollow op, and the nanosheet 40 coupled to the hollow nanofibre 30, may be produced. In more detail, as shown in FIG. 7, the photocatalyst 100 may include the nanosheet 40 coupled to an inner circumferential surface of the hollow nanofibre 30, which is directed toward the hollow op, and an outer circumferential surface of the hollow nanofibre 30.

According to one embodiment, the hollow nanofibre 30 may include a ternary phase including at least one of the first metal element and the second metal element that is different from the first metal element. In detail, for example, the first metal element may be zinc (Zn), the second metal element may be tin (Sn), and the hollow nanofibre 30 may include zinc oxide (ZnO), tin oxide (SnO₂), and zinc tin oxide (ZnSnO₃) as the ternary phase. However, the present disclosure is not limited thereto.

According to one embodiment, the nanosheet 40 may include a transition metal element and a chalcogen element. In more detail, for example, the transition metal element may be molybdenum (Mo), the chalcogen element may be selenium (Se), and the nanosheet 40 may include molybdenum diselenide (MoSe₂). However, the present disclosure is not limited thereto.

Accordingly, according to the embodiment of the present disclosure, when the photocatalyst 100 is irradiated with light, electrons may move from the nanosheet 40 to the ternary phase of the hollow nanofibre 30, and carbon dioxide (CO₂) may be reduced to carbon monoxide (CO) and/or methane (CH₄).

In other words, the photocatalyst 100 according to the embodiment of the present disclosure may convert carbon dioxide (CO₂) into other materials, for example, carbon monoxide (CO) and/or methane (CH₄), without using expensive precious metals, unlike conventional photocatalysts.

Accordingly, the photocatalyst 100 according to the embodiment of the present disclosure may efficiently convert carbon dioxide (CO₂) at a low cost, unlike existing photocatalysts that use expensive precious metals.

Furthermore, according to the embodiment of the present disclosure, the photocatalyst 100 may also have excellent carbon dioxide (CO₂) photoreduction activity, carbon dioxide (CO₂) selectivity, carbon monoxide (CO), methane (CH₄), and/or hydrogen (H₂) reduction yield, and stability.

Hereinafter, experimental examples of the present disclosure will be described.

### Production of Photocatalyst according to Experimental Example 1 (ex1)

In 7 mL of an N,N-dimethylformamide (DMF) solvent, 850 mg of zinc chloride (ZnCl₂) and 700 mg tin(IV) chloride pentahydrate (SnCl₄5H₂O) were dissolved as the first source 1 and the second source 2, respectively, 600 mg of polyvinylpyrrolidone ((C₆H₉NO)ₙ) K90 was mixed and stirred for 24 hours as the polymer material 3, and 0.1 mL of acetic acid (CH₃COOH) was mixed for 2 hours as the acid material 4, so that the mixed solution 10 was produced.

The mixed solution 10 was provided inside a syringe including a 25-gauge needle that is away from the collector by 110 mm, discharged onto the collector at a DC voltage of 10 kV and a flow rate of 10 µL/min, collected every 2 hours, and dried in a 60 °C oven for 3 hours, so that the composite nanofibre 20 was produced.

On the composite nanofibre 20, the first heat treatment was performed at 700 °C for 3 hours at a ramping rate of 4 °C/min, and the second heat treatment was performed at 600 °C for 2 hours at a ramping rate of 2 °C/min, so that the hollow nanofibre 30 was produced.

In 60 mL of a mixed solvent of 30 mL of distilled water and 30 mL of ethanol, 630 mg of sodium molybdate (Na₂MoO₄) powder and 400 mg of selenium (Se) powder were mixed and dissolved at 1:1 vol% for 30 minutes as the transition metal source and the chalcogen source, respectively, 98 mg of sodium borohydride (NaBH₄) was added and stirred for 30 minutes as the reducing agent, and 5 wt%, that is, 60 mg of the hollow nanofibre 30 was added and stirred for 1 hour, so that a mixed solution was produced.

The mixed solution was provided inside an autoclave, and a hydrothermal treatment was performed at 200 °C for 49 hours, so that a preliminary photocatalyst was produced.

The preliminary photocatalyst was cooled to a room temperature, filtered, repeatedly washed with distilled water and ethanol until pH 7 is reached to remove salts and residues, and dried in an oven for 12 hours, so that a photocatalyst according to Experimental Example 1 (ex1) of the present disclosure in which the nanosheet 40 is formed on the hollow nanofibre 30 was produced.

### Production of Photocatalyst according to Experimental Example 2 (ex2)

In Experimental Example 1 described above, 10 wt%, that is, 120 mg of the hollow nanofibre 30 was added, and a photocatalyst according to Experimental Example 2 (ex2) of the present disclosure was produced.

### Production of Photocatalyst according to Experimental Example 3 (ex3)

In Experimental Example 1 described above, 15 wt%, that is, 180 mg of the hollow nanofibre 30 was added, and a photocatalyst according to Experimental Example 3 (ex3) of the present disclosure was produced.

### Production of Photocatalyst according to Experimental Example 4 (ex4)

In 60 mL of a mixed solvent of 30 mL of distilled water and 30 mL of ethanol, 630 mg of sodium molybdate (Na₂MoO₄) powder and 400 mg of selenium (Se) powder were mixed and dissolved at 1:1 vol% for 30 minutes as the transition metal source and the chalcogen source, respectively, and 98 mg of sodium borohydride (NaBH₄) was added and stirred for 30 minutes as the reducing agent, so that a mixed solution was produced.

The mixed solution was provided inside an autoclave, and a hydrothermal treatment was performed at 200 °C for 49 hours, so that a nanosheet according to Experimental Example 4 (ex4) of the present disclosure was produced.

### Production of Photocatalyst according to Experimental Example 5 (ex5)

In 7 mL of an N,N-dimethylformamide (DMF) solvent, 850 mg of zinc chloride (ZnCl₂) and 700 mg tin(IV) chloride pentahydrate (SnCl₄5H₂O) were dissolved as the first source 1 and the second source 2, respectively, 600 mg of polyvinylpyrrolidone ((C₆H₉NO)ₙ) K90 was mixed and stirred for 24 hours as the polymer material 3, and 0.1 mL of acetic acid (CH₃COOH) was mixed for 2 hours as the acid material 4, so that the mixed solution 10 was produced.

The mixed solution 10 was provided inside a syringe including a 25-gauge needle that is away from the collector by 110 mm, discharged onto the collector at a DC voltage of 10 kV and a flow rate of 10 µL/min, collected every 2 hours, dried in a 60 °C oven for 3 hours, and the first heat treatment was performed at 700 °C for 3 hours at a ramping rate of 4 °C/min, so that a composite nanofibre according to Experimental Example 5 (ex5) of the present disclosure was produced.

### Production of Photocatalyst according to Experimental Example 6 (ex6)

In Experimental Example 5 described above, the second heat treatment was performed on the composite nanofibre at 600 °C for 2 hours at a ramping rate of 2 °C/min, so that a hollow nanofibre according to Experimental Example 6 (ex6) of the present disclosure was produced.

Experimental Examples 1 to 6 described above may be summarized in Table 1 below.

**[Table 1]**

| Classification | Transition metal source | Chalcogen source | Reducing agent | Nanofibre |
|---|---|---|---|---|
| Experimental Example 1 (ex1) | 630 mg | 400 mg | 98 mg | 5 wt% of hollow nanofibre |
| Experimental Example 2 (ex2) | 630 mg | 400 mg | 98 mg | 10 wt% of hollow nanofibre |
| Experimental Example 3 (ex3) | 630 mg | 400 mg | 98 mg | 15 wt% of hollow nanofibre |
| Experimental Example 4 (ex4) | 630 mg | 400 mg | 98 mg | - |
| Experimental Example 5 (ex5) | - | - | - | 5 wt% of composite nanofibre |
| Experimental Example 6 (ex6) | - | - | - | 5 wt% of hollow nanofibre |

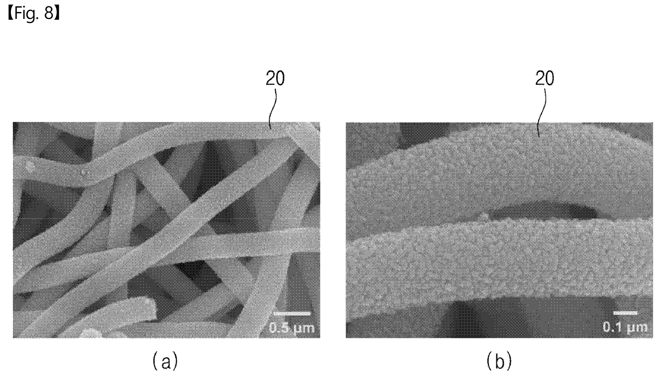

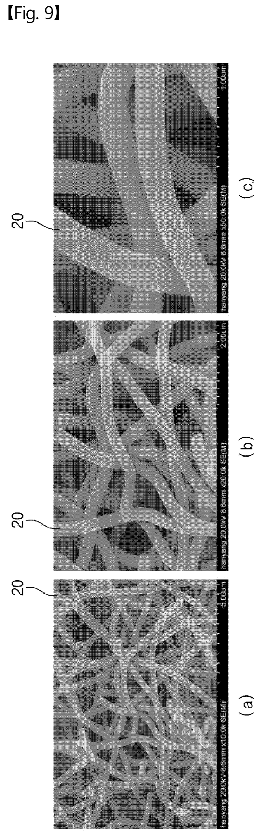

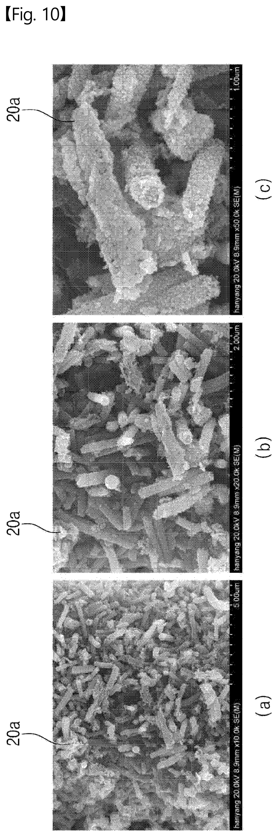

FIGS. 8 and 9 are field emission scanning electron microscope (FE-SEM) photographs of a composite nanofibre according to Experimental Example 5 of the present disclosure, and FIG. 10 is an FE-SEM photograph of a composite nanofibre according to a modified example of Experimental Example 5 of the present disclosure.

In a case of a composite nanofibre 20a according to a modified example of Experimental Example 5, the composite nanofibre 20a according to the modified example of Experimental Example 5 was produced without mixing acetic acid (CH₃COOH) as the acid material 4 in Experimental Example 5 described above.

Referring to FIGS. 8 and 9, in a case of the composite nanofibre according to Experimental Example 5 (ex5) in which acetic acid (CH₃COOH) was mixed as the acid material 4 while only the first heat treatment was performed, a smooth surface may be observed.

Meanwhile, referring to FIG. 10, in a case of the composite nanofibre 20a according to the modified example of Experimental Example 5 in which acetic acid (CH₃COOH) was not mixed as the acid material 4 while only the first heat treatment was performed, it may be observed that the composite nanofibre 20a includes more concavo-convex portions on a surface thereof than the composite nanofibre according to Experimental Example 5 (ex5).

Accordingly, it may be found that acetic acid (CH₃COOH) influences the surface of the composite nanofibre 20 as the acid material 4 in formation of the composite nanofibre 20.

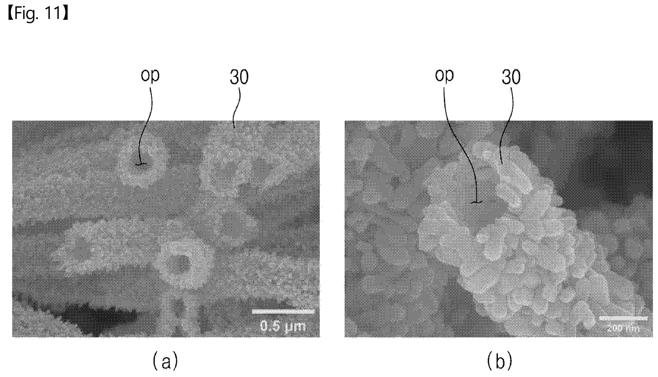

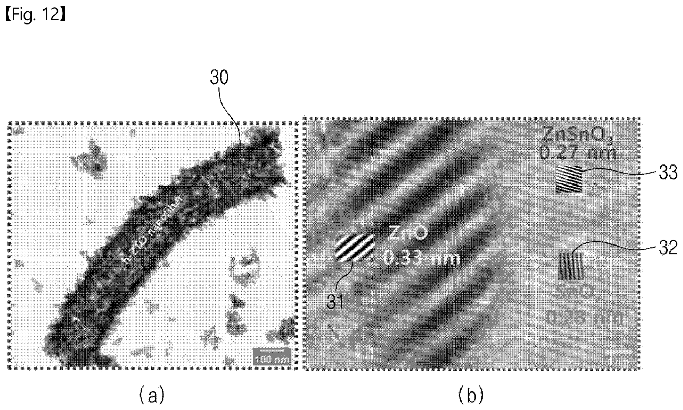

FIG. 11 is an FE-SEM photograph of a hollow nanofibre according to Experimental Example 6 of the present disclosure, and FIG. 12 is a high-resolution transmission electron microscopy (HR-TEM) photograph of the hollow nanofibre according to Experimental Example 6 of the present disclosure.

Referring to FIG. 11, when a heat treatment is performed up to the second heat treatment, it may be observed that the produced hollow nanofibre according to Experimental Example 6 (ex6) includes a hollow op. Accordingly, it may be demonstrated that the hollow op may be formed through the second heat treatment.

In addition, referring to FIG. 12, it may be observed that the hollow nanofibre according to Experimental Example 6 (ex6) includes a ternary phase of zinc oxide (ZnO) 31, tin oxide (SnO₂) 32, and zinc tin oxide (ZnSnO₃) 33.

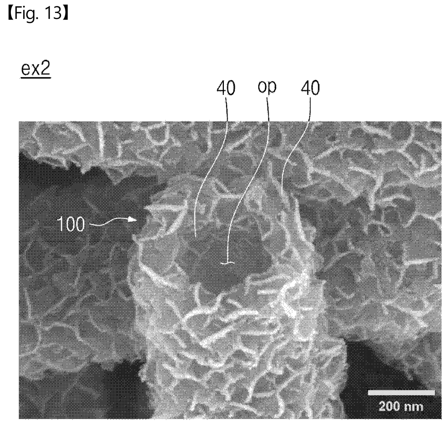

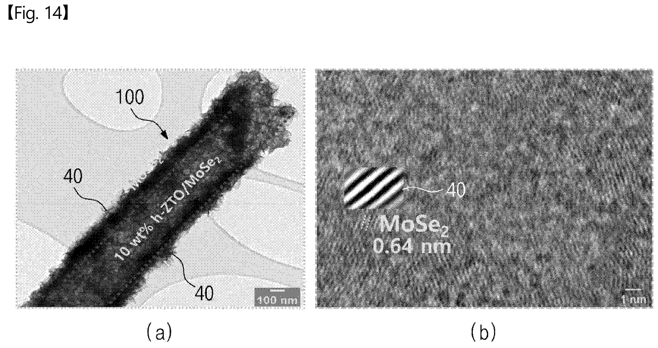

FIG. 13 is an FE-SEM photograph of a photocatalyst according to Experimental Example 2 of the present disclosure, and FIG. 14 is an HR-TEM photograph of the photocatalyst according to Experimental Example 2 of the present disclosure.

Referring to FIGS. 13 and 14, it may be observed that the photocatalyst according to Experimental Example 2 (ex2), which is produced to include 10 wt% of the hollow nanofibre 30, includes the hollow nanofibre 30 including a hollow op, and includes the nanosheet 40 coupled to an inner circumferential surface of the hollow nanofibre 30, which is directed toward the hollow op, and an outer circumferential surface of the hollow nanofibre 30.

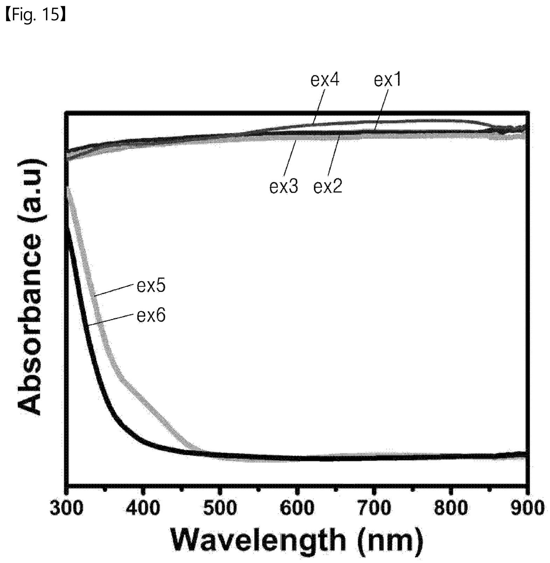

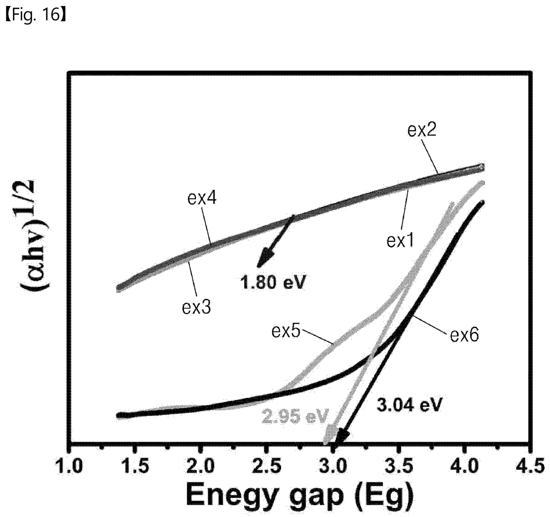

FIG. 15 is a graph showing ultraviolent-visible light absorption of Experimental Examples 1 to 6 of the present disclosure, and FIG. 16 is a graph showing band-gap energy of Experimental Examples 1 to 6 of the present disclosure.

Referring to FIG. 15, it may be found that unlike Experimental Examples 5 and 6 (ex5 and ex6), the photocatalysts according to Experimental Examples 1 to 3 and the nanosheet according to Experimental Example 4 (ex1 to ex4) have excellent absorbance characteristics at wavelengths of 300 nm or more and 900 nm or less. In particular, it may be found that the photocatalysts according to Experimental Examples 1 to 3 and the nanosheet according to Experimental Example 4 (ex1 to ex4) have excellent absorbance characteristics at wavelengths near 840 nm.

Referring to FIG. 16, it may be found that the photocatalysts according to Experimental Examples 1 to 3 and the nanosheet according to Experimental Example 4 (ex1 to ex4) have band-gap energy of 1.80 eV, and Experimental Examples 5 and 6 (ex5 and ex6) have band-gap energy of 2.95 eV and 3.04 eV, respectively.

Accordingly, in cases of the photocatalysts according to Experimental Examples 1 to 3 (ex1 to ex3), it may be found that through the second heat treatment, zinc oxide (ZnO), tin oxide (SnO₂), and zinc tin oxide (ZnSnO₃) are densely stacked on the hollow nanofibre 30 as the ternary phase. Accordingly, it may be found that a quantum confinement effect in which a valence band edge and a conduction band edge move apart from each other so as to widen a band-gap may occur in the photocatalysts according to Experimental examples 1 to 3 (ex1 to ex3).

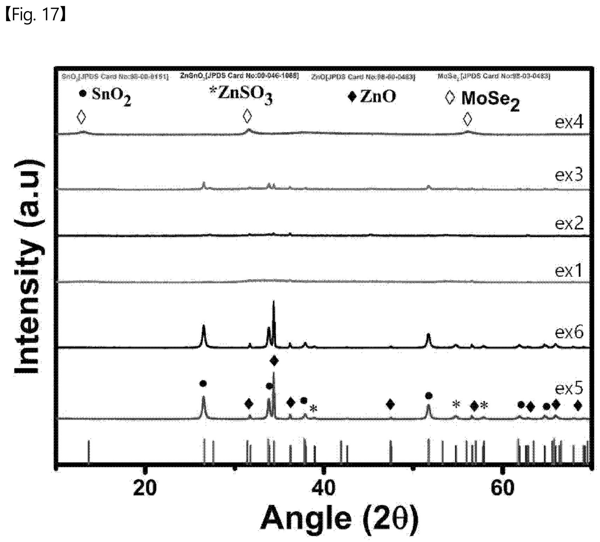

FIG. 17 is a graph showing X-ray diffraction (XRD) of Experimental Examples 1 to 6 of the present disclosure.

In the X-ray diffraction (XRD) graph shown in FIG. 17, diffraction peaks corresponding to zinc oxide (ZnO) of the ternary phase may have 2θ values of 31.698, 34.367, 36.188, 47.480, 56.521, 62.800, 67.886, 69.006, 72.525, and 76.918, which may correspond to (100), (002), (101), (102), (110), (103), (112), (201), (004), and (202) planes. In addition, diffraction peaks corresponding to tin oxide (SnO₂) of the ternary phase may have 2θ values of 26.486, 33.793, 37.874, 42.643, 51.697, 54.691, 61.812, 64.690, 65.889, 71.215, and 78.647, which may correspond to (110), (101), (200), (210), (211), (220), (310), (112), (301), (202), and (321) planes. In addition, diffraction peaks corresponding to zinc tin oxide (ZnSnO₃) of the ternary phase may have 2θ values of 38.911, 54.686, and 57.788, which may correspond to (111), (110), and (002) planes.

Referring to FIG. 17, in a case of the photocatalyst according to Experimental Example 1 (ex1), it may be found that since a content of the added hollow nanofibre 30 is 5 wt%, which is insufficient, the nanosheet 40 formed on the hollow nanofibre 30 is insufficient. Meanwhile, in a case of the photocatalyst according to Experimental Example 3 (ex3), it may be found that since a content of the added hollow nanofibre 30 is 15 wt%, which is excessive, the nanosheet 40 formed on the hollow nanofibre 30 is excessively formed. Meanwhile, in a case of the photocatalyst according to Experimental Example 2 (ex2), it may be found that since a content of the added hollow nanofibre 30 is 10 wt%, which is appropriate, the nanosheet 40 formed on the hollow nanofibre 30 is appropriately formed.

When matrix flushing theory is used with reference to FIG. 17, the photocatalyst according to Experimental Example 2 (ex2) that is appropriately formed as described above may be quantified. In more detail, according to the matrix flushing theory, in the photocatalyst according to Experimental Example 2 (ex2), the ternary phase may include 26.87% of zinc oxide (ZnO), 63.00% of tin oxide (SnO₂), and of 10.13% zinc tin oxide (ZnSnO₃). In addition, according to the matrix flushing theory, the photocatalyst according to Experimental Example 2 (ex2) may include 9.24% of zinc oxide (ZnO), 25.55% of tin oxide (SnO₂), 8.28% of zinc tin oxide (ZnSnO₃), and 56.93% of molybdenum diselenide (MoSe₂) as the nanosheet 40.

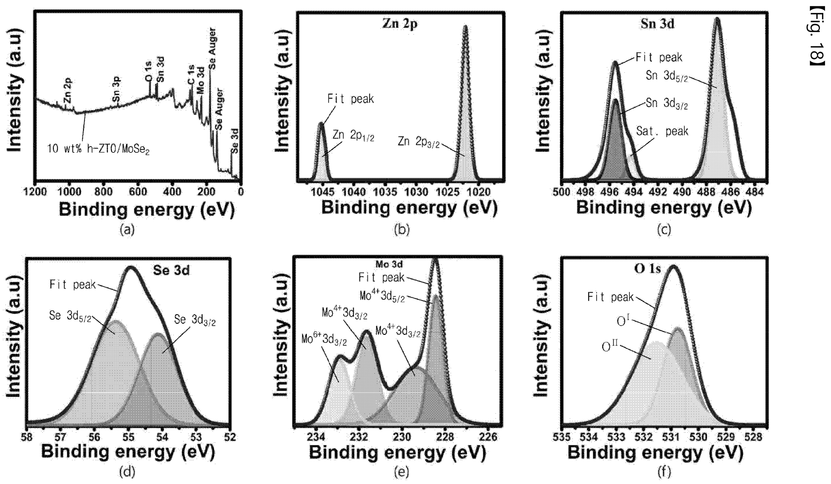

FIG. 18 is a graph showing X-ray photoelectron spectroscopy (XPS) of Experimental Example 2 of the present disclosure.

Referring to FIG. 18(a), peaks of zinc (Zn), tin (Sn), oxygen (O), molybdenum (Mo), and selenium (Se) may be observed in the photocatalyst according to Experimental Example 2 (ex2).

Referring to FIG. 18(b), it may be observed that the photocatalyst according to Experimental Example 2 (ex2) has double binding energy peaks at 1022.12 eV and 1045.34 eV in a zinc (Zn) 2p spectrum. The double binding energy peaks at 1022.12 eV and 1045.34 eV may mean that zinc (Zn) is in a (+2)-oxidation state, and the double binding energy peaks at 1022.12 eV and 1045.34 eV correspond to Zn 2p 3/2 and Zn 2p 1/2, respectively. A difference between the double binding energy peaks is 23.22 eV, and it may be found through the difference between the double binding energy peaks that the photocatalyst according to Experimental Example 2 (ex2) includes zinc oxide (ZnO) .

Referring to FIG. 18(c), it may be observed that the photocatalyst according to Experimental Example 2 (ex2) has double binding energy peaks at 487.05 eV and 495.53 eV corresponding to Sn 3d 3/2 and Sn 3d 5/2, respectively, in a tin (Sn) 3d spectrum. A difference between the double binding energy peaks is 8.48 eV, and it may be found through the difference between the double binding energy peaks that the photocatalyst according to Experimental Example 2 (ex2) includes tin oxide (SnO₂).

Referring to FIG. 18(d), it may be observed that the photocatalyst according to Experimental Example 2 (ex2) has double binding energy peaks at 55.3 eV and 54.4 eV corresponding to Se 3d 3/2 and Se 3d 5/2, respectively, in a selenium (Se) 3d spectrum. It may be found through a difference between the double bond energy peaks that the photocatalyst according to Experimental Example 2 (ex2) includes selenium (Se).

Referring to FIG. 18(e), it may be observed that the photocatalyst according to Experimental Example 2 (ex2) has multiple binding energy peaks at 232 eV, 228 eV, and 229 eV corresponding to Mo 3d 3/2 and Mo 3d 5/2 in a molybdenum (Mo) 3d spectrum. It may be found through the multiple binding energy peaks that the photocatalyst according to Experimental Example 2 (ex2) includes molybdenum (Mo).

Referring to FIG. 18(f), it may be found that the photocatalyst according to Experimental Example 2 (ex2) has an oxygen (O) peak (O1s) corresponding to 531.5 eV. This may be because the photocatalyst according to Experimental Example 2 (ex2) includes zinc oxide (ZnO), tin oxide (SnO₂), and/or zinc tin oxide (2nSnO₃).

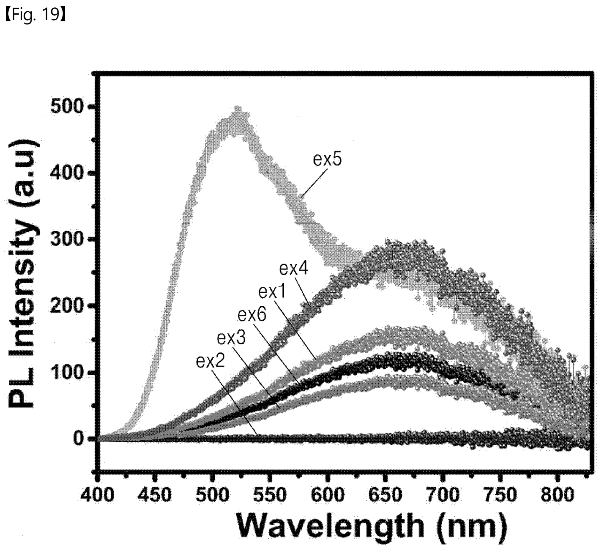

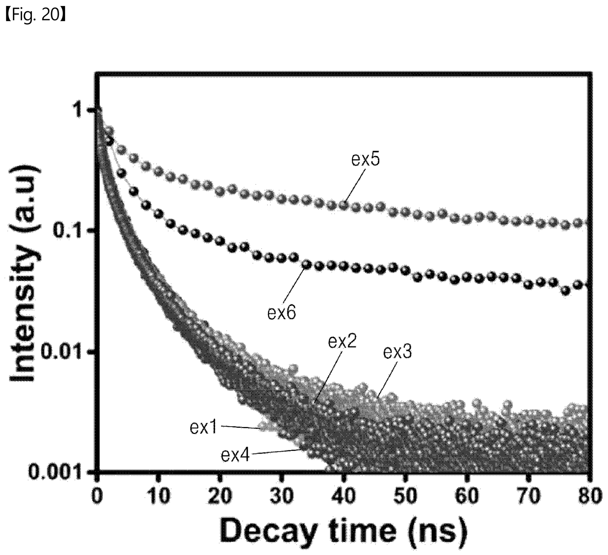

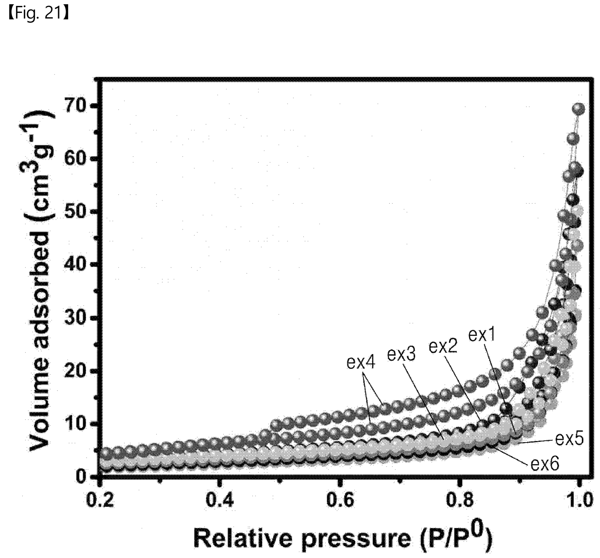

FIG. 19 is a graph showing steady-state photoluminescence spectra of Experimental Examples 1 to 6 of the present disclosure, FIG. 20 is a graph showing time-resolved photoluminescence spectra of Experimental Examples 1 to 6 of the present disclosure, and FIG. 21 is a graph showing Brunauer-Emmett-Teller (BET) adsorption isotherms of Experimental Examples 1 to 6 of the present disclosure.

Referring to FIG. 19, it may be observed that the composite nanofibre according to Experimental Example 5 (ex5) emits a photoluminescence (PL) peak corresponding to 520 nm at a room temperature, while the photocatalysts according to Experimental Examples 1 to 3 (ex1 to ex3), the nanosheet according to Experimental Example 4 (ex4), and the hollow nanofibre according to Experimental Example 6 (ex6) emit a photoluminescence (PL) peak corresponding to 670 nm at a room temperature.

Comparing the peaks of the composite nanofibre according to Experimental Example 5 (ex5) and the hollow nanofibre according to Experimental Example 6 (ex6), it may be observed that the peak of Experimental Example 6 (ex6) is lower. This may be because oxygen vacancies that serve as electron sinks that increase lifetime of electrons on a surface of a photocatalyst are formed in the hollow nanofibre according to Experimental Example 6 (ex6).

Meanwhile, comparing the peaks of the photocatalysts according to Experimental Examples 1 to 3 (ex1 to ex3), it may be observed that the peak of the photocatalyst according to Experimental Example 2 (ex2) is lower than each of the peaks according to Experimental Examples 1 and 3 (ex1 and ex3). Accordingly, it may be demonstrated that a relatively large number of oxygen vacancies, which increase lifetime of electrons, are formed on the surface of the photocatalyst according to Experimental Example 2 (ex2). Furthermore, it may be demonstrated through the lower peak of the photocatalyst according to Experimental Example 2 (ex2) that the hollow nanofibre 30 and the nanosheet 40 are more coupled to each other in the photocatalyst according to Experimental Example 2 (ex2) than in other experimental examples.

Referring to FIG. 20, it may be found that the composite nanofibre according to Experimental Example 5 (ex5) has the longest average lifespan, and the photocatalyst according to Experimental Example 2 (ex2) has the shortest average lifespan. This may be because, in the photocatalyst according to Experimental Example 2 (ex2), the nanosheet 40 coupled to the inner circumferential surface of the hollow nanofibre 30, which is directed to the hollow op, and the outer circumferential surface of the hollow nanofibre 30 is provided in a greater amount while being more uniform, so that light scattering occurs more than in other experimental examples.

The photocatalyst according to Experimental Example 2 (ex2) in which the nanosheet 40 coupled to the inner circumferential surface of the hollow nanofibre 30, which is directed to the hollow op, and the outer circumferential surface of the hollow nanofibre 30 is provided in a greater amount while being more uniform may capture excited electrons more rapidly than other experimental examples.

Referring to FIG. 21, it may be observed that all the photocatalysts according to Experimental Examples 1 to 3 (ex1 to ex3) have Type IV isotherms. Accordingly, it may be found that all the photocatalysts according to Experimental Examples 1 to 3 (ex1 to ex3) are mesoporous materials.

Meanwhile, referring to the graph shown in FIG. 21, results may be summarized in Table 2 below.

**[Table]**

| Classification | Specific surface area (S_{BET}) | Pore volume | Pore size |
|---|---|---|---|
| Experimental Example 1 (ex1) | 12.01 m²g⁻¹ | 0.085 cm³g⁻¹ | 18.43 nm |
| Experimental Example 2 (ex2) | 11.83 m²g⁻¹ | 0.090 cm³g⁻¹ | 21.72 nm |
| Experimental Example 3 (ex3) | 11.03 m²g⁻¹ | 0.071 cm³g⁻¹ | 20.21 nm |
| Experimental Example 4 (ex4) | 15.98 m²g⁻¹ | 0.092 cm³g⁻¹ | 18.84 nm |
| Experimental Example 5 (ex5) | 7.54 m²g⁻¹ | 0.042 cm³g⁻¹ | 15.623 nm |
| Experimental Example 6 (ex6) | 10.93 m²g⁻¹ | 0.069 cm³g⁻¹ | 21.20 nm |

Referring to FIG. 21 and Table 2 above, it may be found that the photocatalyst according to Experimental Example 2 (ex2) has the largest pore volume among the photocatalysts according to Experimental Examples 1 to 3 (ex1 to ex3). Furthermore, it may be found that the photocatalyst according to Experimental Example 2 (ex2) has the largest pore size among all Experimental Examples (ex1 to ex6).

Accordingly, since the photocatalyst according to Experimental Example 2 (ex2) has a large specific surface area, a large pore volume, and a large pore size, the photocatalyst according to Experimental Example 2 (ex2) may have excellent photocatalytic activity and a fast charge-recombination rate.

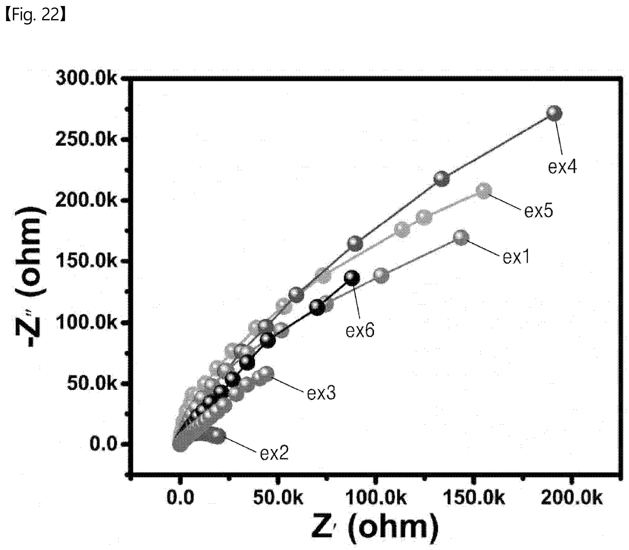

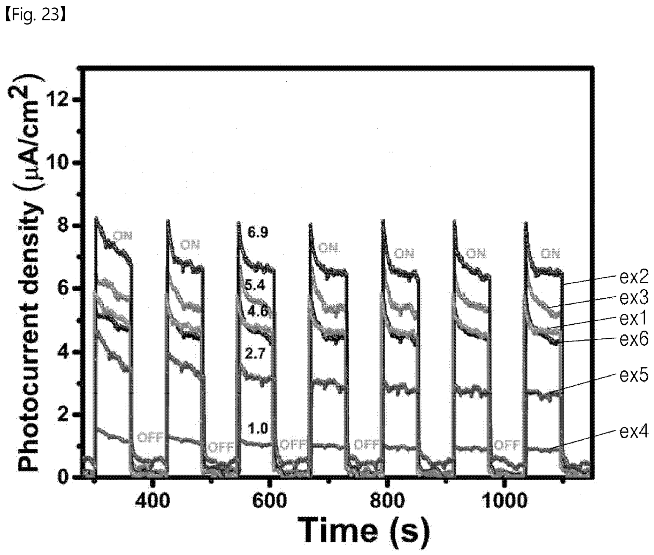

FIG. 22 is a graph showing Nyquist plots of Experimental Examples 1 to 6 of the present disclosure, and FIG. 23 is a graph showing on-off switching of Experimental Examples 1 to 6 of the present disclosure.

Referring to FIG. 22, it may be found that a Nyquist plot of the photocatalyst according to Experimental Example 2 (ex2) has the smallest arc semicircular curve. In addition, it may be found through FIG. 22 that the photocatalyst according to Experimental Example 2 (ex2) has the smallest resistance value.

Accordingly, it may be demonstrated that the photocatalyst according to Experimental Example 2 (ex2) has a higher electron-hole separation rate and faster charge carrier dynamics than other experimental examples.

Referring to FIG. 23, it may be found that the photocatalyst according to Experimental Example 2 (ex2) has the highest photocurrent density.

Accordingly, it may be demonstrated that the photocatalyst according to Experimental Example 2 (ex2) has superior photogenerated charge separation efficiency than other experimental examples.

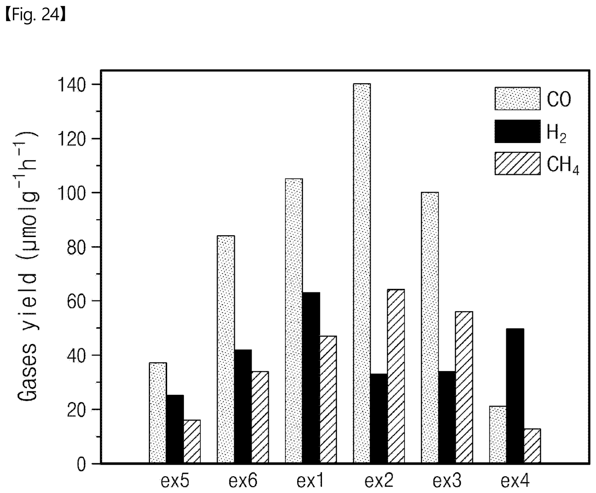

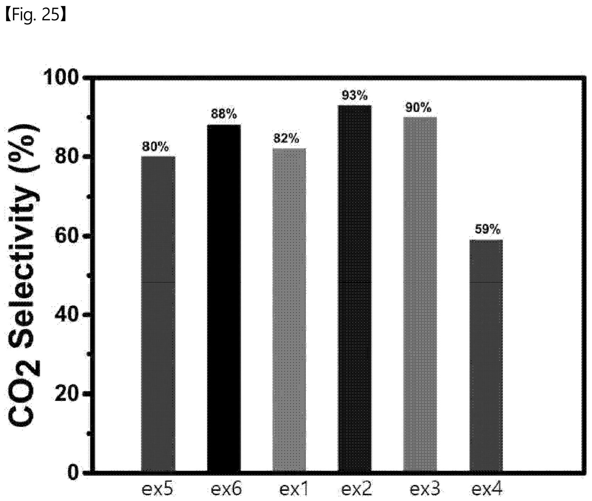

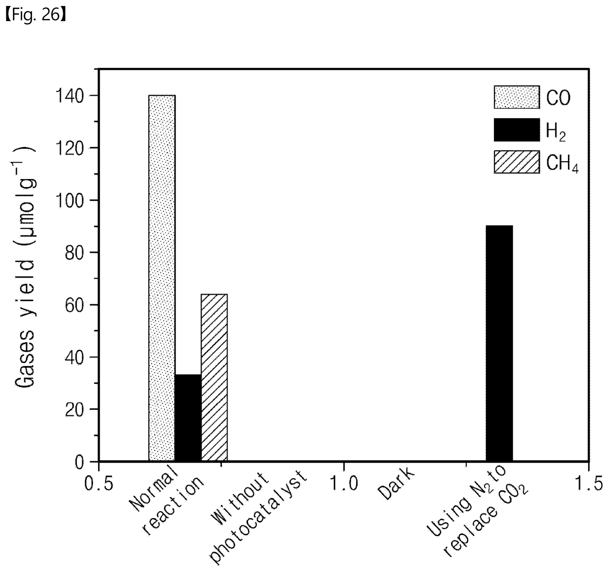

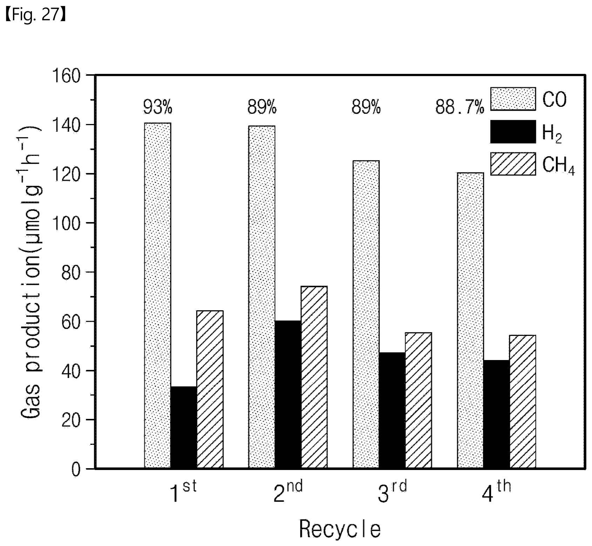

FIG. 24 is a graph showing carbon monoxide (CO), methane (CH₄), and hydrogen (H₂) yield of Experimental Examples 1 to 6 of the present disclosure, FIG. 25 is a graph showing carbon dioxide (CO₂) selectivity of Experimental Examples 1 to 6 of the present disclosure, FIG. 26 is a graph showing carbon monoxide (CO), methane (CH₄), and hydrogen (H₂) yield of Experimental Example 2 of the present disclosure under various conditions, and FIG. 27 is a graph showing stability of Experimental Example 2 of the present disclosure.

Experiments according to FIGS. 24 to 27 were performed under conditions in Table 3 below.

**[Table 3]**

| Oven conditions | |
|---|---|
| Mode | Program |
| Run time | 14.6 min |
| Initial temperature | 60 °C |
| Initial time | 10 min |
| Maximum temperature | 40 °C |

| Capillary | |
|---|---|
| Carrier gas | Helium (He) |
| Temperature | 120 °C |
| Flow rate | 6 ml/min |

Referring to FIG. 24, when irradiation is performed with ultraviolet-visible light (UV-Vis) while triethanolamine (TEOA) is provided as a sacrificial agent, it may be found that yield of carbon monoxide (CO) and yield of methane (CH₄) produced by the photocatalyst according to Experimental Example 2 (ex2) are 140 µmolg⁻¹h⁻¹ and 64 µmolg⁻¹h⁻¹, respectively, which are the largest. Accordingly, excellent reducibility of the photocatalyst according to Experimental Example 2 (ex2) may be demonstrated.

Referring to FIG. 25, it may be found that carbon dioxide (CO₂) selectivity of the photocatalyst according to Experimental Example 2 (ex2) is 93%, which is the most excellent. Accordingly, excellent carbon dioxide (CO₂) selectivity of the photocatalyst according to Experimental Example 2 (ex2) may be demonstrated.

Referring to FIG. 26, it may be found that the photocatalyst according to Experimental Example 2 (ex2) reduces carbon dioxide (CO₂) to carbon monoxide (CO), methane (CH₄) , and hydrogen (H₂), and reduces nitrogen (N₂) to hydrogen (H₂). Accordingly, excellent reducibility of the photocatalyst according to Experimental Example 2 (ex2) may be demonstrated.

Referring to FIG. 27, it may be found that as a result of evaluating reduction yield over four cycles by using the photocatalyst according to Experimental Example 2 (ex2), the reduction yield is decreased only slightly as the number of cycles increases. Accordingly, safety of the photocatalyst according to Experimental Example 2 (ex2) may be demonstrated.

Although the exemplary embodiments of the present disclosure have been described in detail above, the scope of the present disclosure is not limited to a specific embodiment, and shall be interpreted by the appended claims. In addition, it is to be understood by a person having ordinary skill in the art that various changes and modifications can be made without departing from the scope of the present disclosure.

## Claims

1. A method for producing a photocatalyst, the method comprising:
producing a hollow nanofibre; and
producing a photocatalyst by forming a nanosheet on the hollow nanofibre.

2. The method of claim 1, wherein the producing of the hollow nanofibre includes:
producing a mixed solution by mixing a first source including a first metal element and a second source including a second metal element that is different from the first metal element;
producing a composite nanofibre by electrospinning the mixed solution; and
producing the hollow nanofibre in which a hollow is formed in the composite nanofibre by performing a heat treatment on the composite nanofibre.

3. The method of claim 2, wherein the hollow nanofibre includes a ternary phase including at least one of the first metal element and the second metal element.

4. The method of claim 3, wherein the ternary phase includes zinc oxide (ZnO), tin oxide (SnO₂), and zinc tin dioxide (ZnSnO₃),
the nanosheet includes molybdenum diselenide (MoSe₂),
electrons move from the nanosheet to the ternary phase, and
carbon dioxide (CO₂) is reduced to carbon monoxide (CO) or methan (CH₄).

5. The method of claim 2, wherein the first source and the second source are further mixed with a polymer material and an acid material.

6. The method of claim 2, wherein the heat treatment includes:
a first heat treatment performed at a first temperature for a first time; and
a second heat treatment performed at a second temperature that is lower than the first temperature for a second time that is shorter than the first time, and
the hollow is formed through the second heat treatment.

7. The method of claim 5, wherein the first source includes zinc acetate dihydrate (Zn(CH₃COO)₂.2H₂O) or zinc chloride (ZnCl₂),
the second source includes tin(IV) chloride pentahydrate (SnCl₄5H₂O),
the polymer material includes polyvinylpyrrolidone (PVP; (C₆H₉NO)ₙ), and
the acid material includes acetic acid (CH₃COOH).

8. The method of claim 1, wherein, in the producing of the photocatalyst,
the photocatalyst in which the nanosheet is formed on the hollow nanofibre is produced by mixing the hollow nanofibre with a transition metal source and a chalcogen source, and performing a hydrothermal treatment, and
the hollow nanofibre, the transition metal source, and the chalcogen source are further mixed with a reducing agent.

9. The method of claim 8, wherein the hollow nanofibre is provided in an amount of 5 wt% or more and 15 wt% or less.

10. The method of claim 6, wherein a hydrothermal treatment for producing the photocatalyst is performed at a third temperature that is lower than the second temperature for a third time that is longer than the first time.

11. The method of claim 8, wherein the transition metal source includes sodium molybdate (Na₂MoO₄), and
the chalcogen source includes selenium (Se).

12. A photocatalyst comprising:
a hollow nanofibre including a hollow; and
a nanosheet coupled to the hollow nanofibre.

13. The photocatalyst of claim 12, wherein the hollow nanofibre includes a ternary phase including at least one of a first metal element and a second metal element that is different from the first metal element, and
the nanosheet includes a transition metal element and a chalcogen element.

14. The photocatalyst of claim 13, wherein electrons move from the nanosheet to the ternary phase, and
carbon dioxide is reduced to carbon monoxide and methane.

15. The photocatalyst of claim 13, wherein the first metal element includes zinc (Zn),
the second metal element includes tin (Sn),
the ternary phase includes zinc oxide (ZnO), tin oxide (SnO₂), and zinc tin dioxide (ZnSnO₃),
the transition metal element includes molybdenum (Mo),
the chalcogen element includes selenium (Se), and
the nanosheet includes molybdenum diselenide (MoSe₂).
